Europäisches Patentamt

European Patent Office

Office européen des brevets

(19)

(11) **EP 0 938 204 A1**

(12) **EUROPEAN PATENT APPLICATION**
published in accordance with Art. 158(3) EPC

(43) Date of publication:
25.08.1999 Bulletin 1999/34

(51) Int. Cl.$^6$: **H04J 13/00**

(21) Application number: 98907275.6

(86) International application number:
PCT/JP98/01129

(22) Date of filing: 17.03.1998

(87) International publication number:
WO 98/42093 (24.09.1998 Gazette 1998/38)

(84) Designated Contracting States:
DE FR GB

(30) Priority: 18.03.1997 JP 8585997
28.05.1997 JP 15577897

(71) Applicant:
MATSUSHITA ELECTRIC INDUSTRIAL CO., LTD.
Kadoma-shi, Osaka 571-8501 (JP)

(72) Inventors:
• MIYA, Kazuyuki
Kawasaki-shi Kanagawa 215-0021 (JP)
• HIRAMATSU, Katsuhiko
Yokosuka-shi Kanagawa 239-0831 (JP)

(74) Representative:
Grünecker, Kinkeldey,
Stockmair & Schwanhäusser
Anwaltssozietät
Maximilianstrasse 58
80538 München (DE)

(54) **CALIBRATION DEVICE FOR ARRAY ANTENNA WIRELESS RECEIVER**

(57)    In an array antenna radio receive system comprising an array antenna containing a plurality of antenna elements and a plurality of radio reception units provided for said antenna elements, a calibration signal with substantiallyy the same frequency band as a spread signal used for spread spectrum communications is passed through said radio reception units and the delay characteristic or amplitude characteristic of said radio reception units is detected from said calibration signal that has passed said radio reception units.

FIG. 9

## Description

Technical Field

The present invention relates to calibration apparatus that detect the delay characteristic and amplitude characteristic of a plurality of radio receiving sections in a direct sequence CDMA system based array antenna radio receiving apparatus and calibrate so that the delay characteristic and amplitude characteristic be consistent between the radio receiving sections.

Background Art

One of the line connection method for a plurality of communication stations to perform communications simultaneously with the same frequency band is the multiple access system and one type of this is the CDMA (Code Division Multiple Access) system. The CDMA system is division multiple accesses and refers to a technology for multiple accesses using spectrum spreading comminations in which a spectrum of a information signal is spread in a band sufficiently wide rather than the original bandwidth of the information signal. It is sometimes also called spread spectrum multiple accesses (SSMA). The system in which the spectrum is spread with an information signal directly multiplied by a spreading code is called a "Direct Sequence System."

"Wave form Equalization Technology for Digital Mobile Communications" (compiled under the supervision of Jun Horikoshi, Triceps Co., Ltd. ) discloses that in an array antenna having a plurality of antennas, shifting an amplitude/phase of the reception output (antenna output) of each antenna and then synthesizing them will change the directivity of the array. An adaptive array antenna system determines a weight by which each antenna output is multiplied based on a certain control algorithm and controls the directivity in accordance with changes in surrounding conditions.

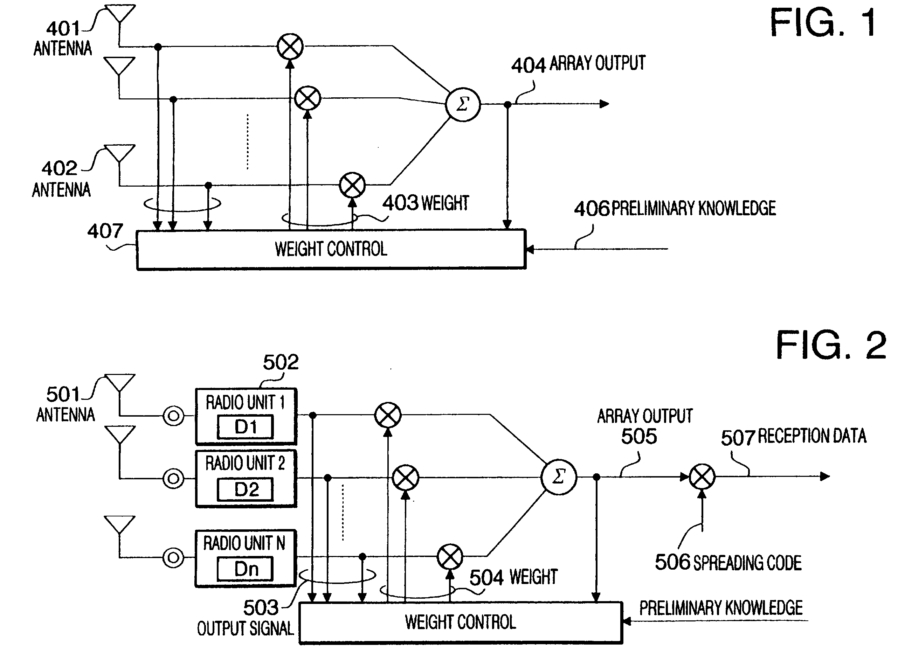

FIG.1 shows the configuration of a system that controls the directivity of desired signals using the adaptive array (hereafter referred to as reception adaptive array). In this adaptive array, each antenna output 402 output from a plurality of antenna devices 401 is multiplied by weight 403. The signal synthesized from each antenna output multiplied by weight 403 is array output 404.

Weight control section 407 performs weight control based on three kinds of information: 1) synthesized array output (405), 2) each antenna output (402), 3) preliminary knowledge regarding desired signals (406).

Conventionally, the adaptive array antenna system has been developed as an antenna system to maximize SINR (Signal to Interference plus Noise Ratio) of a received signal.

Furthermore, in the field of direct sequence CDMA communications, there are numerous studies and reports on systems using the adaptive array antenna for suppressing interference between stations. The CDMA system has an advantage of greater resistance to interference compared to the FDMA system and TDMA system. However, as the number of multiple stations increases, achieving synchronization becomes more difficult, producing the problem of deteriorating the communication quality and disabling communications. The main reason for this problem is that interference between different stations based on the cross-correlation characteristics between spreading codes assigned to a plurality of other communication stations is not suppressed enough. In a CDMA system based cellular system, too, since there are numerous other stations that use the same frequency not only in other cells but also in the local cell, the ability to suppress interference between other stations described above will make it possible to improve the frequency reuse, enhance the quality of communication of each station in the same cell (area) and increase the capacity (number of multiplexed links or number of connection links)

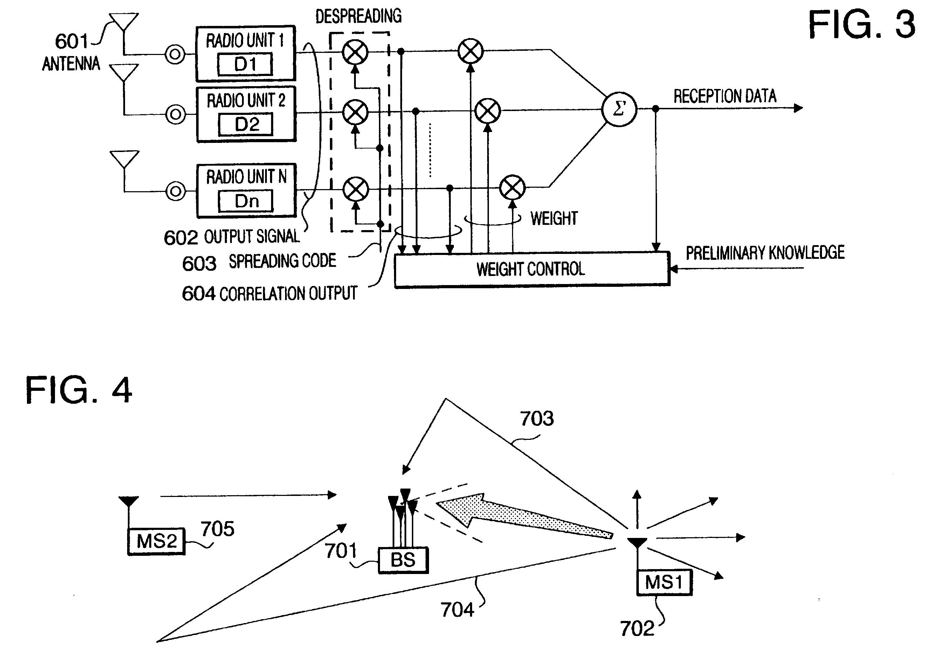

FIG.2 and FIG.3 show a configuration example of the CDMA reception adaptive array.

In FIG.2, output signals 503 output from a plurality of radio units 502 connected to a plurality of antenna devices 501 is multiplied by weight 504. Output signals 503 each multiplied by weight 504 are synthesized, and the synthesized signal is output as array output 505. Weight control is performed in the same way as in FIG.1. The array output 505 is despread with spreading code 506 to obtain a reception data 507.

FIG.3 shows a configuration of the adaptive array reception system which inputs a correlator output 604 obtained by despreading each output signal 602 from a plurality of radio units connected to a plurality of antenna devices 601 by spreading code 603. This configuration is similar to that in FIG.2 except the despreading by the spreading code.

FIG.4 shows an example of CDMA transmission using the adaptive array antenna on the receiving side. Base station (BS:701) has an adaptive array, communicating with a mobile station (MS1:702) having a directional antenna. By controlling the radio directivity, BS701 can eliminate delayed waves (703 and 704) and suppress the interference wave from another mobile station (MS2:705) using the same frequency.

On the other hand, in the CDMA adaptive array above, variations (D1, D2, ..., Dn) composed of phase variations and amplitude variations are varied from one radio unit to another due to dispersions of delay characteristic and amplitude characteristic of the components of each radio unit such as amplifier and filter, etc. Therefore, phase variation component and amplitude variation component varying from one radio unit to another are added to output signal 503 or 602. As a result, the phase and amplitude of the reception signal wave at the antenna reception end and the phase and amplitude of the input signal to the weight control section vary from one antenna to another. This causes the radiation pattern obtained from the weight convergence result including null points to differ from the actual radiation pattern. Further, in the case of controlling the transmission directivity using the above reception weight, prevents directivity control appropriately.

To prevent the above phenomenon, it is indispensable to hold the phase difference and amplitude ratio of the received signal at each antenna reception end in the stage of the input signal to the weight control section. For this reason, it is necessary to detect the delay (D1, D2, ..., Dn) and amplitude of each radio unit and compensate the amounts of delay and amplitude variations (difference) beforehand by a certain means.

As a method for compensating variations of delay and amplitude, there is a method in which each of output signal 503 and 602 from each radio unit is multiplied a phase offset equivalent to the delay difference and gain offset equivalent to the amplitude ratio. Details of the detection of variations in the phase and amplitude characteristics of the adaptive array system are reported in the thesis "G.V.Tsoulos, M.A. Beach "Calibration and Linearity issues for an Adaptive Antenna System", IEEE VTC, Phoenix, pp.1597-1660, May 1997. However, the thesis above is targeted at TDMA communications which use a narrower communication bandwidth than that of CDMA communications and use a tone signal as the calibration signal.

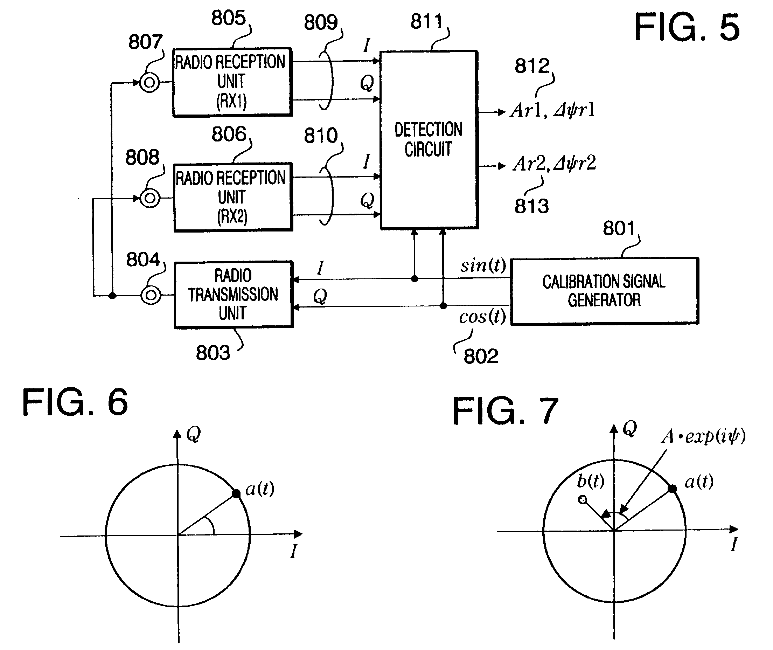

FIG.5 shows a calibration system at the radio units for conventional CDMA radio communications. It shows a case with two antenna devices. Tone signal (sine wave signal) 802 generated from calibration signal generator 801 is input to radio transmission unit 803. In this example, supposing that quadrature modulation is performed at the radio units, $\sin(\omega 1)$ and $\cos(\omega 1)$ signal are input as the I and Q signals that are mutually orthogonal. At this time, tone signal cycle T is $T = 2\pi/\omega$ and $\omega = fs/m$ (m>1) with respect to information symbol frequency fs. FIG. 6 shows a constellation of the tone signal on the IQ plane. The signal rotates on the circumference in a constant cycle of $2\pi/\omega$. Radio transmission unit 803 has a transmission function to transmit a signal at received carrier frequency fc of the radio reception unit that detects the delay. The signal output at carrier frequency fc is transmitted from transmit terminal 804 to antenna connection terminals 807 and 808 at radio reception sections 805 and 806. At this time, the cables have the same length with sufficient accuracy with respect to the wavelength of the carrier frequency. Quadrature detection outputs 809 and 810 at the respective radio reception units are input to detection circuit 811. Detection circuit 811 compares tone signal 802 input and detection output 809 and detects (amplitude ratio, phase difference) = (Ar1, $\Delta\psi$r1) 812. Furthermore, it compares tone signal 802 and detection output 810 and detects (amplitude ratio, phase difference) = (Ar2, $\Delta\psi$r2) 813. FIG.7 shows a constellation example of tone signal a(t) and detection output b(t) at time t. At this time, the relationship between b(t) and a(t) is expressed using phase difference $\psi$ and amplitude ratio A as follows:

$$b(t) = A \cdot \exp(j\psi) \cdot a(t)$$

Phase difference $\psi$ represents the delay amount (phase amount) correspond to the modulo (D mod$\lambda$ : mod is remainder operator) obtained by dividing the delay amount D which is total delay amount of radio transmission unit delay Dt, cable delay Dk and radio reception unit delay Dr (D = Dt + Dk + Dr) by tone signal wavelength $\lambda = c/\omega$ (c: velocity of light). In FIG.5, since delay Dt of the radio transmission unit and cable delay Dk are common for two radio reception units 805 806, thus the difference between phase difference $\Delta\psi$ r1 and $\Delta\psi$r2 detected equal to a delay amount difference between radio reception units 805 and 806. Amplitude ratio A represents the amplitude ratio of the amplitude of calibration signal 802 to the amplitude of the detection output. Therefore, the ratio of amplitude ratio Ar1 to Ar2 detected represents the difference (amplitude ratio) of the amplitude characteristics of radio reception units 805 and 806.

Detecting the amplitude ratio and phase difference of each radio unit using the above system beforehand allows variations (differences) to be compensated.

However, since the calibration system above uses a tone signal as the calibration signal, it only measures the delay characteristic and amplitude characteristic of central frequency f0, for example. On the contrary, the spectrum spread signal used in actual CDMA radio communications is a wideband signal and the amounts of delay and attenuation vary depending on the frequency as the case with a group delay characteristic and frequency characteristic of the filter, etc. of the radio unit, and thus it has the problem that it cannot measure delay characteristic and amplitude characteristic correctly when a spectrum spread signal is received.

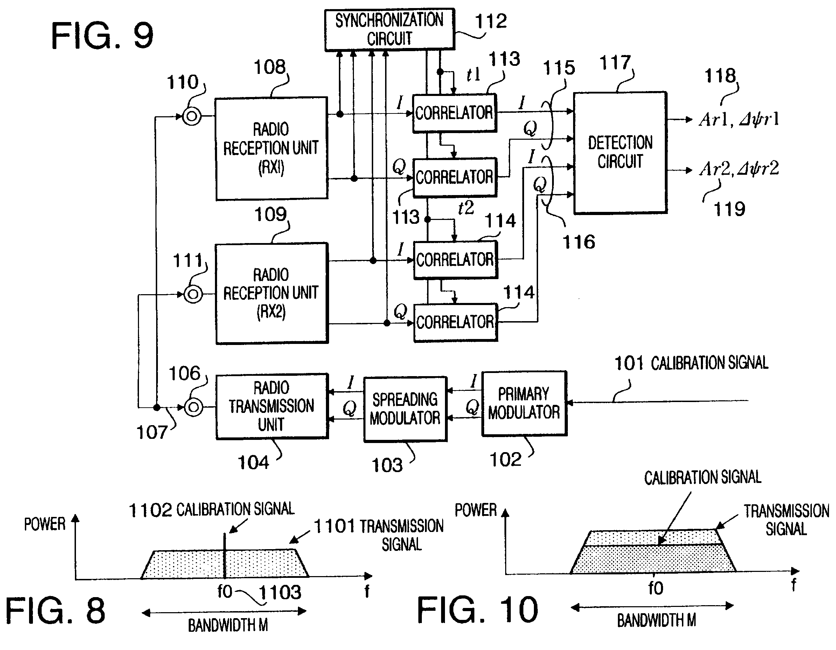

FIG.8 shows a spectrum condition with a conventional calibration system. This figure shows that the calibration signal is a line spectrum while the spread signal is a wideband signal with a bandwidth of M[Hz] having central frequency f0.

Disclosure of Invention

The present invention has taken into account such circumstances, and the objective of the present invention is, when detecting the delay characteristic and amplitude characteristic of the radio units in CDMA radio reception systems, to provide a calibration system for the array antenna radio communication apparatus capable of accurately detecting the delay characteristic and amplitude characteristic at the radio reception units by using a signal with the same bandwidth as that of the spectrum spread signal used for actual communications or close to it as the calibration signal.

The present invention provides a calibration system that detects at least one of the delay characteristics and amplitude characteristics of each radio reception unit using a calibration signal with the same bandwidth as that of the spread spectrum signal used for actual communications or close to it and corrects the delay characteristic and amplitude characteristic of each radio reception unit.

Since the present invention uses the calibration signal with the same bandwidth as that of the CDMA communication spread spectrum signal used for actual communications or close to it, it can accurately measure the delay characteristic and amplitude characteristic upon receiving the spread signal even if there are characteristics with the amounts of delay and attenuation variable depending on the frequency such as group delay characteristic and frequency characteristic of filters of the radio units, etc.

The present invention also provides a calibration apparatus comprising a primary modulator that primary-modulates the calibration signal, spread modulator that spread-modulates the primary modulated calibration signal, radio transmit circuit that converts this spread modulated calibration signal to a receive carrier frequency, and transmit path that transmits the calibration signal with the above receive carrier frequency to each radio reception unit.

According to the present invention, it is possible to generate a wideband signal similar to the CDMA communication spread signal used for actual communications as the calibration signal allowing accurate measurement of delay characteristic and amplitude characteristic.

The present invention also provides a calibration apparatus comprising a synchronization detection circuit that detects the synchronization timing of the calibration signal received at each radio reception unit, despreading circuit that despreads the received calibration signal at said synchronization timing, and detection circuit that detects a delay difference and amplitude difference from a reference identification point using each despread correlator output from each radio reception unit.

According to the present invention, it is possible to detect the phase and amplitude of the correlator output obtained by despreading the output signal from each radio unit, allowing the amount of delay and amplitude at each radio reception unit which received a wideband signal similar to the spread signal of the CDMA communication used for actual communications as the calibration signal to be detected as the delay difference and amplitude ratio from the reference identification point, thus providing accurate measurement of the delay characteristic and amplitude characteristic of the radio reception units.

The present invention also provides a calibration system comprising a comparator that compares each correlator output between radio reception units, detection circuit that detects a delay difference and amplitude ratio of each radio reception unit, and storage circuit that outputs or stores said delay difference and amplitude ratio.

According to the present invention, the directive pattern obtained from the weight convergence result including null points is matched with the actual directive pattern, making it possible to use the delay difference and amplitude ratio between radio reception units as an offset value by which the output signal of each radio reception unit is multiplied.

The present invention also provides a calibration system comprising a variable receive level circuit that changes the level of receive power input to the radio reception unit and a detection circuit that detects a delay difference and/or amplitude ratio of each radio unit for each receive power level.

The present invention can calculate in detail the amount of delay and/or amplitude difference between radio units according to she receive power level, allowing accurate compensation of the delay difference and amplitude difference in the array antenna radio receive apparatus according to the receive power level.

The present invention further provides a calibration system comprising a switching circuit that switches a signal input to the radio reception unit according to the control signal to the receive signal from the receive antenna or calibration signal.

The present invention makes it possible to measure the delay characteristic and amplitude characteristic of the radio reception unit at any desired time, allowing accurate compensation even if the above delay characteristic and amplitude characteristic vary with time due to the operating environment, etc.

The present invention also provides a calibration system comprising a multiplexing circuit that multiplexes a receive signal from the receive antenna with the calibration signal.

The present invention allows the calibration signal to be multiplexed during communication, making it possible to measure the delay characteristic and amplitude characteristic constantly or at any desired time.

The present invention also provides a calibration system comprising a switching circuit that switches the input of the receive calibration signal output from each radio unit to the synchronization detection circuit and the despreading circuit for each radio reception unit on a time sharing basis.

According to the present invention, calculating delay differences and amplitude ratios of a plurality of radio reception units on a time sharing basis eliminates the necessity of simultaneously processing synchronization detection, correlative operations, phase detection and amplitude detection for the input signal to a plurality of radio reception units, making it possible to reduce the circuit scale of the calibration system.

The present invention also provides a calibration system that transmits a transmit timing signal from the circuit that controls the transmit timing of the calibration signal to the synchronization detection circuit and obtains the despread timing from the transmit timing of the calibration signal at said synchronization detection circuit.

The present invention inputs the transmit timing of the calibration signal which has been spread-modulated as a cunning signal to the synchronization circuit, thus eliminating the necessity of detecting synchronization from the receive signal to generate the despread timing, making it possible to reduce the circuit scale of the calibration system.

Brief Description of Drawings

FIG.1 is a section diagram of the reception adaptive array;
FIG.2 is a section diagram of the CDMA reception adaptive array;
FIG.3 is a section diagram of another CDMA reception adaptive array;
FIG.4 is a diagram showing an example of CDMA transmission using a reception adaptive array antenna;
FIG.5 is a section diagram of a conventional calibration system;
FIG.6 is a diagram showing a tone signal constellation;
FIG.7 is a diagram showing a constellation of transmit/receive signal using a tone signal;
FIG.8 is a spectrum diagram of calibration signal with a conventional calibration system;
FIG.9 is a section diagram showing an example of the calibration system in Embodiment 1 of the present invention;
FIG.10 is a spectrum diagram of the calibration signal in Embodiment 1 of the present invention;
FIG.11A to FIG.11D are diagrams showing constellations of the primary modulation signal, spread signal and radio unit side in Embodiment 1 of the present invention;
FIG.12 is a section diagram of the calibration system related to Embodiment 2 of the present invention;
FIG.13 is a diagram showing the delay characteristic and amplitude characteristic according to the receive electric field level in Embodiment 2 of the present invention;
FIG.14 is a section diagram of the calibration system related to Embodiment 3 of the present invention;
FIG.15 is a section diagram of the calibration system related to Embodiment 4 of the present invention;
FIG.16 is a section diagram of the calibration system related to Embodiment 5 of the present invention;
FIG.17 is a section diagram of the calibration system related to Embodiment 6 of the present invention;
FIG.18 is a section diagram of the calibration system related to Embodiment 7 of the present invention;
FIG.19 is a section diagram that generates a calibration signal using the communication radio transmission unit in Embodiment 7; and
FIG.20 is a section diagram of the calibration system related to Embodiment 8 of the present invention.

The Best Mode for Carrying out the Invention

With reference now to the attached drawings, the embodiments of the present invention are explained in detail below:

(Embodiment 1)

FIG.9 shows a configuration example of the calibration system related to Embodiment 1 of the present invention. FIG.9 shows a case where there are two antenna devices.

In this calibration system, calibration signal 101 is primary-modulated by primary modulator 102. In the present embodiment, it is supposed that the modulation system used in the calibration system is the same as the system used in normal communications. As an example, QPSF modulation is used for primary modulation and BPSK modulation is used for spread modulation. The radio unit uses quadrature modulation and quadrature detection. The calibration signal used is a fixed signal set to all 0. The primary modulation signal is spectrum-spread and input to radio transmission unit 104.

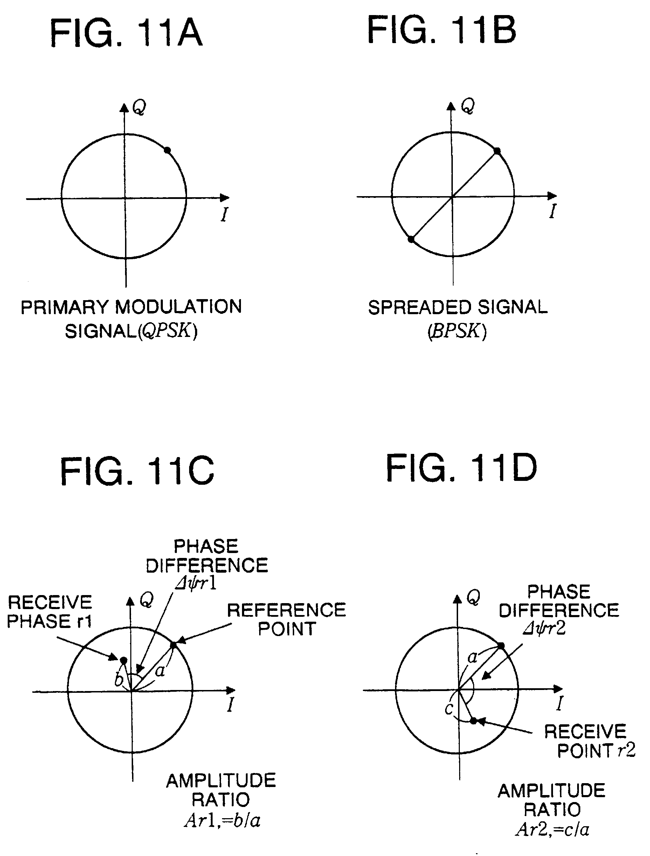

FIG.11C shows a constellation of the primary modulation signal and FIG.11B shows a constellation of the spread signal. In radio transmission unit 104, the transmit signal is quadrature-modulated and then up-converted to carrier frequency fc and output from transmit terminal 106. Carrier frequency fc is the received carrier frequency of the present system (radio reception unit). FIG.10 shows a spectrum of the calibration signal. The spreading rate and transmission rate of the calibration signal are set to have the same bandwidth M[Hz] as that of the transmit signal used during communication. The calibration signal output at carrier frequency fc is transmitted from transmit terminal 106 to antenna connection terminals 110 and 111 of radio reception units 108 and 109 via cable 107. Suppose that the cables have the same length with sufficient accuracy with respect to the wavelength of the carrier frequency.

The reception output of each radio reception unit is input to synchronization circuit 112 and despread timings t1 and t2 for each radio unit are generated. Based on the timings t1 and t2, correlators 113 and 114 carry out despreading to output correlator outputs 115 and 116. Detection circuit 117 calculates (amplitude ratio, phase difference) = (Ar1, $\Delta\psi$r1) 118 by comparing signal receive point (hereafter referred to as receive point) r1 obtained from correlation output 115 and the identification point serving as a reference (hereafter referred to as reference identification point). The phase difference obtained here is equivalent to the amount of delay of the remainder obtained by dividing the total amount D (D = Dt + Dk + Dr1 ) that is the sum of delay Dt of radio transmission unit 104, delay Dk of cable 107 and delay Dr1 of radio reception unit 108 by wavelength $\lambda$c at carrier frequency fc. Likewise, comparing receive point r2 obtained from correlator output 116 and the reference identification point gives (amplitude ratio, phase difference) = (Ar2, $\Delta\psi$r2)119. FIG.11C and FIG.11D show the constellation on the radio unit RX1 (108) side and the constellation on the radio unit RX2 (109) side, amplitude ratio and phase difference from the reference identification point, respectively.

As shown above, since Embodiment 1 uses a signal with the same bandwidth as the spread signal used for actual spread spectrum communications or close to it as the calibration signal to detect the delay characteristic and amplitude characteristic of the radio reception units at the CDMA radio receive system, comparing the correlator output obtained by despreading the signal output from each radio reception unit with the reference identification point makes it possible to accurately detect the delay difference and amplitude ratio.

Furthermore, multiplying the output signal of each radio reception unit by the phase difference and amplitude ratio detected for each radio reception unit as an offset will make it possible to solve the problem that the radiation pattern obtained from the weight convergence result including null points is different from the actual directive pattern.

Embodiment 1 described above uses QPSK modulation as the primary modulation and BPSK modulation as the spread modulation, and quadrature modulation and quadrature detection at the radio units. However, it is not mandatory to use the modulation system and detection system above in the present invention and it is obvious that similar detection is also possible with another system. It is obvious that it facilitates measurement of only one of the phase characteristic or amplitude characteristic.

The detected values need not always be the delay difference from the reference identification point and amplitude ratio; it is also possible to output the offset between radio reception units calculated based on the despread correlator output. For example, suppose that correlator outputs 115 and 116 in FIG.9 (receive points r1 and r2 in FIG.11C and 11D) are expressed by position vectors R1 and R2. Detection circuit 117 obtains an offset value for carrying out compensation to match the phase characteristic and amplitude characteristic of the radio reception units with radio reception unit RX1 (108). At this time, supposing that the offset value is vector Zri (i = 1, 2), the following equations are obtained:

$$Zr1 = 1$$

$$Zr2 = R1/R2 = R1 \times R2^*/|R2|^2 \text{ (*: complex conjugate)}$$

Then, the above values are output as 118 and 119. The calibration system may also output or store the despread correlation values as they are. In this case, the operation to obtain the offset value to compensate the delay difference and amplitude difference at each radio reception unit using the stored correlation values is carried out on the array antenna radio receive system side. The array antenna radio receive system can compensate variations of the delay characteristic and amplitude characteristic by multiplying the output signal from radio reception units RX1 (108) and RX2 (109) by the Zr1 and Zr2 and prevent the radiation pattern obtained from the weight convergence result from being different from the actual directive pattern.

Here, the calibration signal is a fixed continuous signal set to all 0, but the signal need not be a continuous one and it is obvious that it can also be any cyclic burst signal. The cable length is also considered equal for all cables, but even if their lengths are different, if the amount of delay and attenuation are known, the phase difference and amplitude ratio can be obtained by correcting the known amounts of delay and attenuation. The reference signal (clock by a crystal oscillator such as 10 MHz) used for the radio units should be the same for all.

(Embodiment 2)

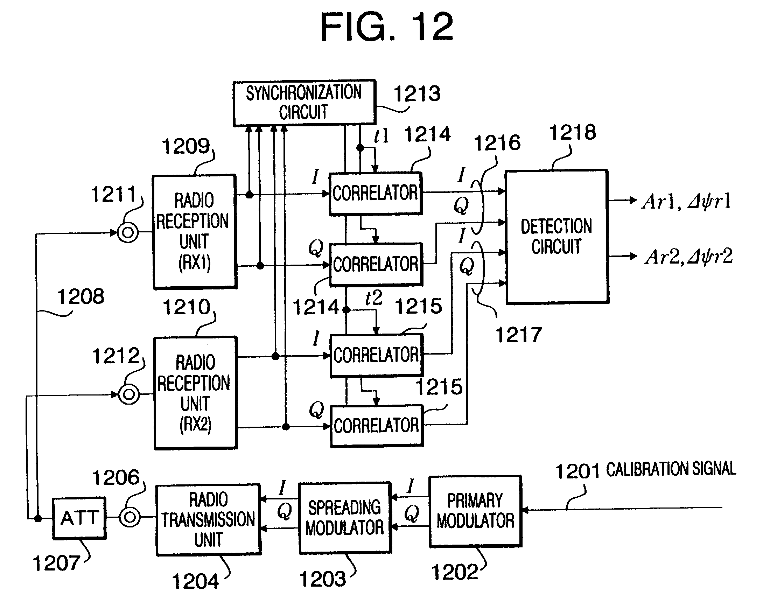

FIG.12 shows a configuration example of the calibration system related to Embodiment 2 of the present invention. This is the calibration system in FIG.9 plus an attenuator. It shows a case where there are two antenna devices as the case with FIG. 9.

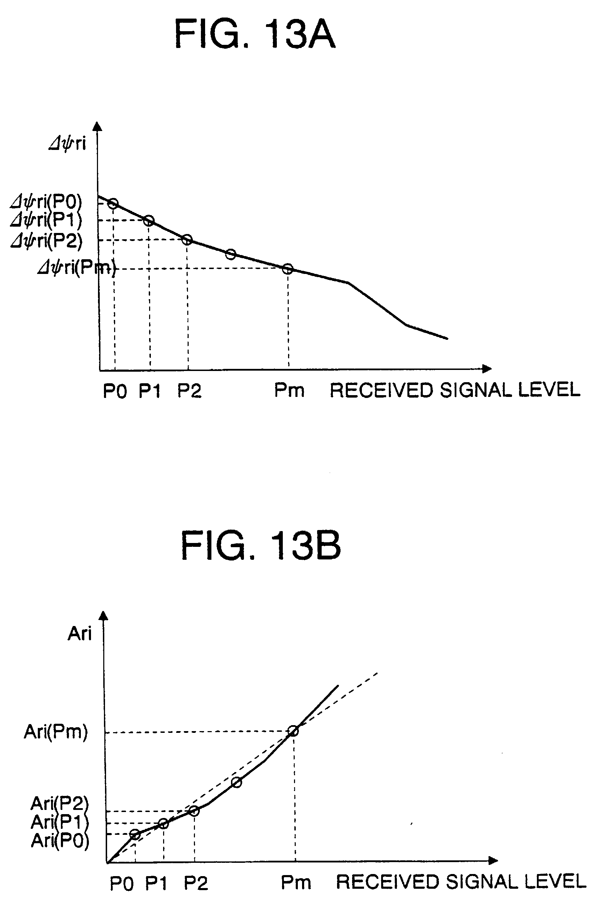

FIG.13 shows an example of delay characteristic $\Delta\psi$ri(Pm) and amplitude characteristic Ari(Pm) of the radio reception unit according to receive electric field level Pm. With such a delay characteristic and amplitude characteristic, as shown in Embodiment 1, it is not enough to detect the amount of delay when a specific receive electric field level is input to the radio reception unit and it is necessary to measure delay characteristic $\Delta\psi$ri(Pm) and amplitude characteristic Ari(Pm) when receive electric field level Pm is changed.

In FIG.12, calibration signal 1201 is primary-modulated by primary modulator 1202. The primary modulation signal is spread by a spread signal in spread modulator 1203 and input to radio transmission unit 1204. In radio transmission unit 1204, the transmit signal is quadrature-modulated and then up-converted to carrier frequency fc and output from transmit terminal 1206. The "fc" is the received carrier frequency of the present system. The signal output at carrier frequency fc is transmitted from transmit terminal 1206 to antenna connection terminals 1211 and 1212 of radio reception units 1209 and 1210 using cable 1208 with attenuator 1207 connected thereto. The reception output from each radio reception unit is input to synchronization circuit 1213 and despread timings t1 and t2 are generated for each radio unit. Then, correlators 1214 and 1215 carry out despreading using said timings t1 and t2 and output correlator outputs 1216 and 1217. Detection circuit 1218 changes the attenuator set values and obtains phase differences $\Delta\psi$r1(Pm) and $\Delta\psi$r2(Pm), and amplitude ratios Ar1(Pm) and Ar2(Pm) and outputs or stores them when receive electric field level Pm is changed.

According to the present embodiment as shown above, it is possible to calculate in detail phase differences $\Delta\psi$r1(Pm) and $\Delta\psi$r2(Pm) which correspond to the differences of the amount of delay of the radio reception units and amplitude ratios Ar1(Pm) and Ar2(Pm) according to the receive electric field level. This makes it possible to accurately compensate variations in the delay characteristic and amplitude characteristic in the array antenna radio receive system according to the receive power level.

(Embodiment 3)

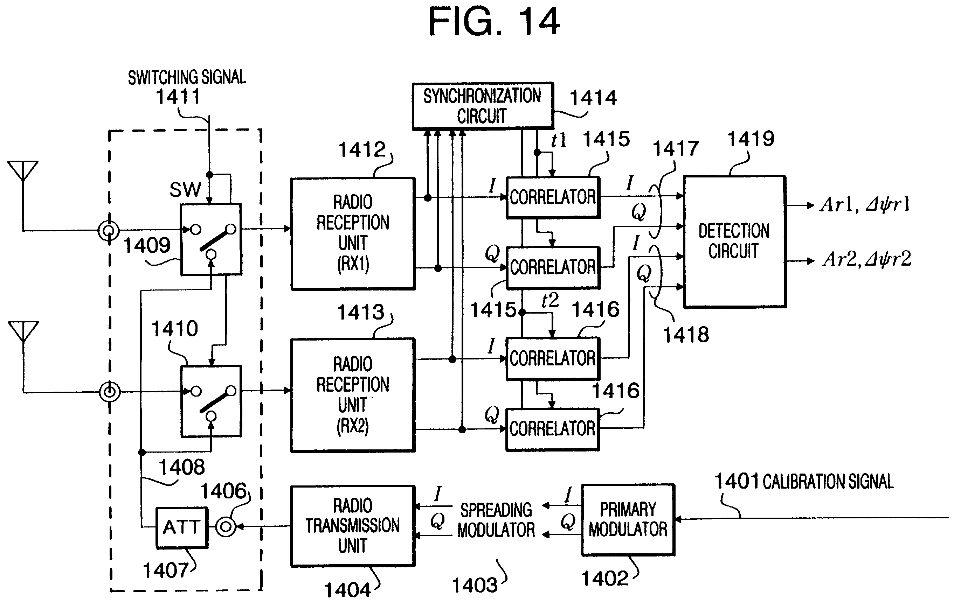

FIG.14 shows a configuration example of the calibration system related to Embodiment 3 of the present invention. This is the calibration system in FIG.12 plus switches. It shows a case where there are two antenna devices as the case with FIG.12.

In FIG.14, calibration signal 1401 is output from transmit terminal 1406 and the same operation as that shown in FIG.12 continues until attenuator 1407 changes the receive electric field level. That is, calibration signal 1401 is primary-modulated by primary modulator 1402. The primary modulation signal is spread by the spreading code in spread modulator 1403 and input to radio transmission unit 1404. In radio transmission unit 1404, the transmit signal is quadrature-modulated and then up-converted to carrier frequency fc and output from transmit terminal 1406. The signal output at carrier frequency fc is transmitted from transmit terminal 1406 to switches 1409 and 1410 using cable 1408 with attenuator 1407 connected thereto. Switches 1409 and 1410 switch the received signal from the antenna and calibration spread signal using SW switching signal 1411. The signals from the switches are transmitted to radio reception units 1412 and 1413. The subsequent operation is the same as that shown in FIG.12. That is, the reception output at each radio reception unit is input to synchronization circuit 1414 and despread timings t1 and t2 are generated for each radio unit. Correlators 1415 and 1416 carry out despreading according to timings t1 and t2 above and output correlator outputs 1417 and 1418. Detection circuit 1419 obtains phase differences $\Delta\psi$ r1(Pm) and $\Delta\psi$r2(Pm) and amplitude ratios Ar1(Pm) and Ar2(Pm) when receive power level Pm is changed by changing the attenuator set values and outputs or stores them.

According to Embodiment 3 as shown above, it is possible to measure the delay characteristic and amplitude characteristic of the radio reception unit according to need by controlling the switch switching signal. This allows accurate compensation even when the above delay characteristic and amplitude characteristic vary with time due to the operating environment, etc.

(Embodiment 4)

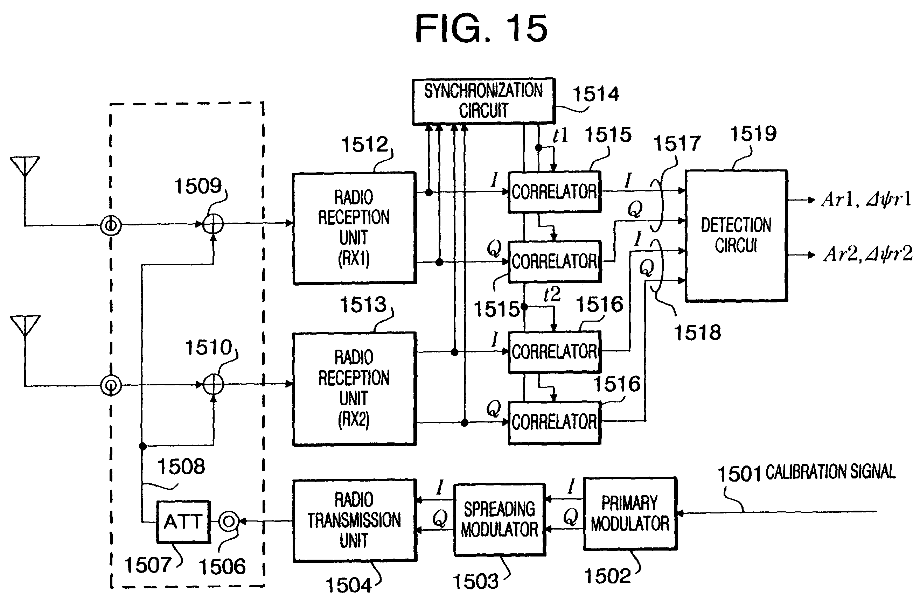

FIG.15 shows a configuration example of the calibration system related to Embodiment 4 of the present invention. It is the calibration system shown in FIG.12 plus a multiplexing circuit. It shows a case where there are two antenna devices as the case with FIG.12.

In FIG.15, the calibration signal is output from the transmit terminal and the same operation as that in FIG.12 continues until the attenuator changes the receive electric field level. That is, calibration signal 1501 is primary-modulated by primary modulator 1502. The primary modulation signal is spread by the spreading code in spread modulator 1503 and input to radio transmission unit 1504. In radio transmission unit 1504, the transmit signal is quadrature-modulated and then up-converted to carrier frequency fc and output from transmit terminal 1506. The signal output at carrier frequency fc is transmitted from transmit terminal 1506 to multiplexing circuits 1509 and 1510 via cable 1508 with attenuator 1507 connected thereto.

Multiplexing circuits 1509 and 1510 multiplex the received signal from the antenna and calibration spread signal. The multiplexed signal is transmitted to radio reception units 1512 and 1513. The subsequent operation is the same as that shown in FIG.12. That is, the receive output at each radio reception unit is input to synchronization circuit 1514 and despread timings t1 and t2 are generated for each radio unit. Correlators 1515 and 1516 carry out despreading according to above timings t1 and t2 and output correlator outputs 1517 and 1518. Detection circuit 1519 obtains phase differences $\Delta\psi$ r1(Pm) and $\Delta\psi$r2(Pm) and amplitude ratios Ar1(Pm) and Ar2(Pm) when receive power level Pm is changed by changing the attenuator set values and outputs or stores them.

According to Embodiment 4 as shown above, it is possible to measure the delay characteristic and amplitude characteristic of the radio reception units all the time or according to need without interrupting normal communication. This allows accurate compensation even when sad delay characteristic and amplitude characteristic change with time due to the operating environment, etc. When no measurement is carried out, turning off the power to the radio transmission units can totally prevent the calibration signal which can be a noise component to the receive signal from being output.

(Embodiment 5)

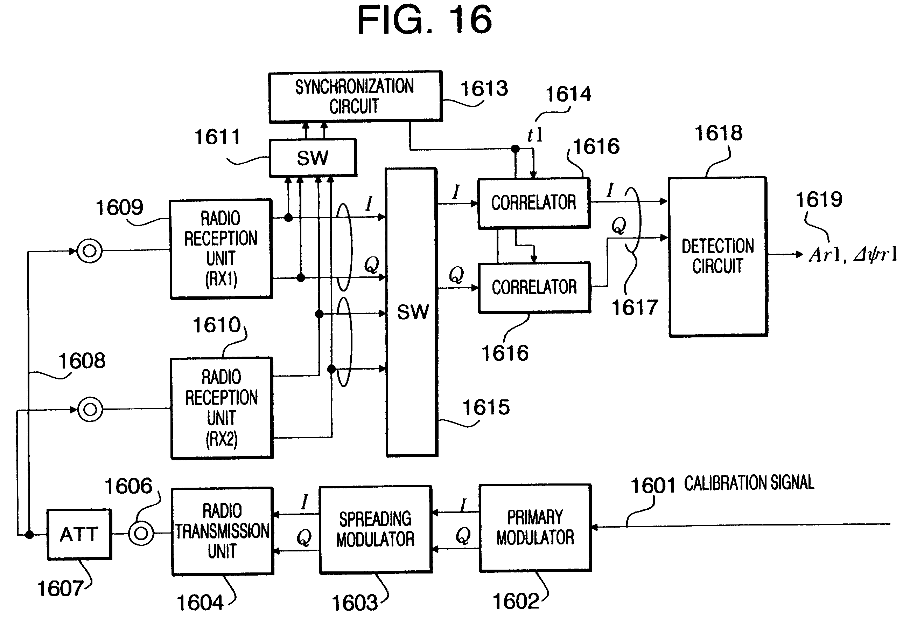

FIG.16 shows a configuration example of the calibration system related to Embodiment 5 of the present invention. It shows a case where there are two antenna devices as the case with FIG.12. In FIG.16, the calibration signal is output from the transmit terminal and the same operation as that in FIG.12 continues until the attenuator changes the receive electric field level. That is, calibration signal 1601 is primary-modulated by primary modulator 1602. The primary modulation signal is spread by the spreading code in spread modulator 1603 and input to radio transmission unit 1604. In radio transmission unit 1604, the transmit signal is quadrature-modulated and then up-converted to carrier frequency fc and output from transmit terminal 1606. The signal output at carrier frequency fc is transmitted from transmit terminal 1606 to radio reception units 1609 and 1610 using cable 1608 with attenuator 1607 connected thereto.

The receive output of each radio reception unit is switched by switch 1611 and input to synchronization circuit 1613 and despread timings ti (i=1, 2) 1614 for each radio unit is output. Switch 1615 also switches so as to select the same received signal as that of said switch 1611 and outputs it to correlator 1616. Correlator 1616 carries out despreading according to said timing ti and outputs correlator output 1617.

Detection circuit 1618 obtains amplitude ratios Ari(Pm) and phase differences $\Delta\psi$ri(Pm) 1619 when receive electric field level Pm is changed by changing the set values of attenuator 1607 and outputs or stores them. Therefore, when switch 1611 selects the output of radio reception unit 1609, despread timing t1 is output from synchronization circuit 1613 and correlator 1616 carries out despreading and outputs correlator output 1617. Detection circuit 1618 obtains amplitude ratio Ar1(Pm) and phase difference $\Delta\psi$ r1(Pm)1619 and outputs or stores them. On the other hand, when switch 1611 selects the output of radio reception unit 1610, despread timing t2 is output from synchronization circuit 1613 and correlator 1616 carries out despreading and outputs correlator output 1617. Detection circuit 1618 obtains amplitude ratio Ar2(Pm) and phase difference $\Delta\psi$ r2(Pm)1619 and outputs or stores them.

According to Embodiment 5 as shown above, when the delay characteristic and amplitude characteristic of a plurality of radio reception units are obtained by switching the switches on a time sharing basis, it is not necessary to process synchronization detection, correlation operations and phase detection on a plurality of radio reception units simultaneously, making it possible to reduce the circuit size of the calibration system.

(Embodiment 6)

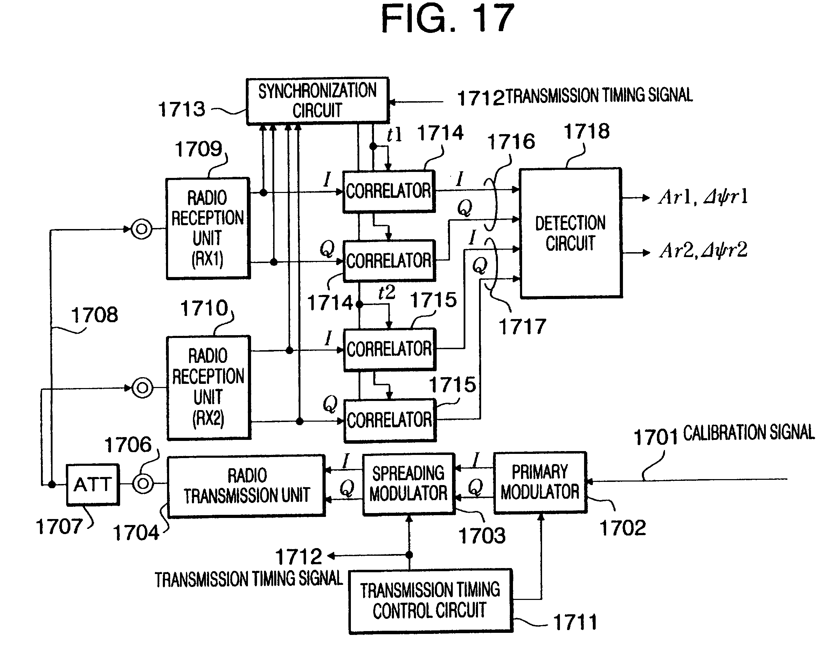

FIG.17 shows a configuration example of the calibration system related to Embodiment 6 of the present invention. It shows a case where there are two antenna devices as the case with FIG. 12. In FIG. 17, the calibration signal is output from the transmit terminal and the same operation as that in FIG.12 continues until the attenuator changes the receive electric field level. That is, calibration signal 1701 is primary-modulated by primary modulator 1702. The primary modulation signal is spread by the spreading code in spread modulator 1703 and input to radio transmission unit 1704. In radio transmission unit 1704, the transmit signal is quadrature-modulated and then up-converted to carrier frequency fc and output from transmit terminal 1706. The signal output at carrier frequency fc is transmitted to radio reception units 1709 and 1710 using cable 1708 with attenuator 1707 connected thereto.

At this time, transmit timing control circuit 1711 outputs transmit timing signal 1712 to primary modulation circuit 1702 and spread modulation circuit 1703 and controls the transmit timing of the spread-modulated calibration signal.

While Embodiments 1 to 5 generate the despread timing by extracting synchronization from the received signal, the present embodiment generates the despread timing by inputting this transmit timing signal 1712 to synchronization circuit 1713 as a cunning signal. That is, despread timings t1 and t2 are generated without the receive output at each radio reception unit being input to synchronization circuit 1713. Furthermore, correlators 1714 and 1715 carry out despreading according to said timings t1 and t2 and output correlator outputs 1716 and 1717. Detection circuit 1718

obtains phase differences $\Delta\psi r1(Pm)$ and $\Delta\psi r2(Pm)$ and amplitude ratios Ar1(Pm) and Ar2(Pm) when receive power level Pm is changed by changing the attenuator set values and outputs or stores them.

According to Embodiment 6 as shown above, since the despread timing is generated by inputting the transmit timing of the spread-modulated calibration signal to the synchronization circuit as a cunning signal, no circuit is required for extracting synchronization from the receive signal. This allows the circuit scale of the calibration system to be reduced.

(Embodiment 7)

FIG.17 shows a configuration example of the calibration system related to Embodiment 7 of the present invention. It shows a case where there are two antenna devices as the case with FIG.12.

Generally, CDMA radio communication systems generate local signals used at the radio transmission unit and radio reception unit by different synthesizers. This is because when the optimum intermediate frequency used for up-converting at the radio transmission unit is different from the optimum intermediate frequency used for down-converting at the radio reception unit, it is necessary to use different local signal frequencies for the radio transmission unit and radio reception unit.

However, when different local signals are used for the radio transmission unit and radio reception unit, a subtle difference may be produced in carrier frequency fc between the transmitting side and receiving side. Therefore, when said phenomenon occurs, even if the amount of delay of the radio unit does not change with time, the receive phase changes with tame. Thus, it is impossible to detect correct values when obtaining phase difference $\Delta\psi r$ and amplitude ratio Ar based on the difference between the reference identification point and receive point.

Thus, the present invention uses the same local signal (Lo signal) for all the radio units in addition to the calibration system in FIG.12.

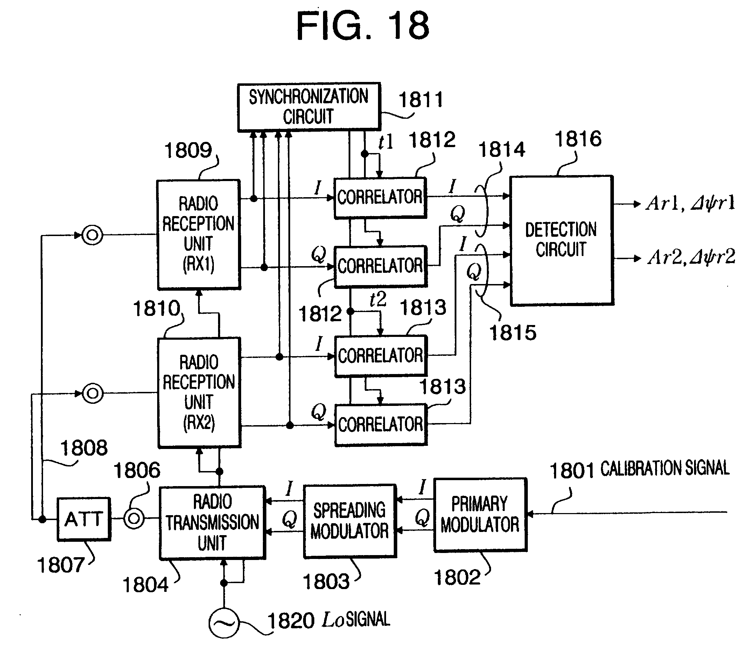

In FIG.18, suppose that local signal 1820 is supplied to all the radio units. The rest of the configuration and operation are the same as those in FIG.12. That is, calibration signal 1801 is primary-modulated by primary modulator 1802. The primary modulation signal is spread by the spreading code in spread modulator 1803 and input to radio transmission unit 1804. In radio transmission unit 1804, the transmit signal is quadrature-modulated and then up-converted to carrier frequency fc and output from transmit terminal 1806. The signal output at carrier frequency fc is transmitted to radio reception units 1809 and 1810 using cable 1808 with attenuator 1807 connected thereto. Then, the receive output at each radio reception unit is input to synchronization circuit 1811 and despread timings t1 and t2 are generated for each radio unit. The receive output at each radio reception unit is input to synchronization circuit 1811 and despread timings t1 and t2 are generated for each radio unit. Correlators 1812 and 1813 carry out despreading according to timings t1 and t2 above and output correlator outputs 1814 and 1815. Detection circuit 1816 obtains phase differences $\Delta\psi$ r1(Pm) and $\Delta\psi r2(Pm)$ and amplitude ratios Ar1(Pm) and Ar2(Pm) when receive power level Pm is changed by changing the attenuator set values and outputs or stores them.

According to Embodiment 7 as shown above, it is possible to eliminate the possibility of differences of carrier frequency fc between the transmitting side and receiving side being generated by using the same local signal on the radio transmitting side and radio receiving side. This causes the phase and amplitude not to change due to factors other than the delay characteristic and amplitude characteristic at the radio units, making it possible to detect an accurate amount of delay.

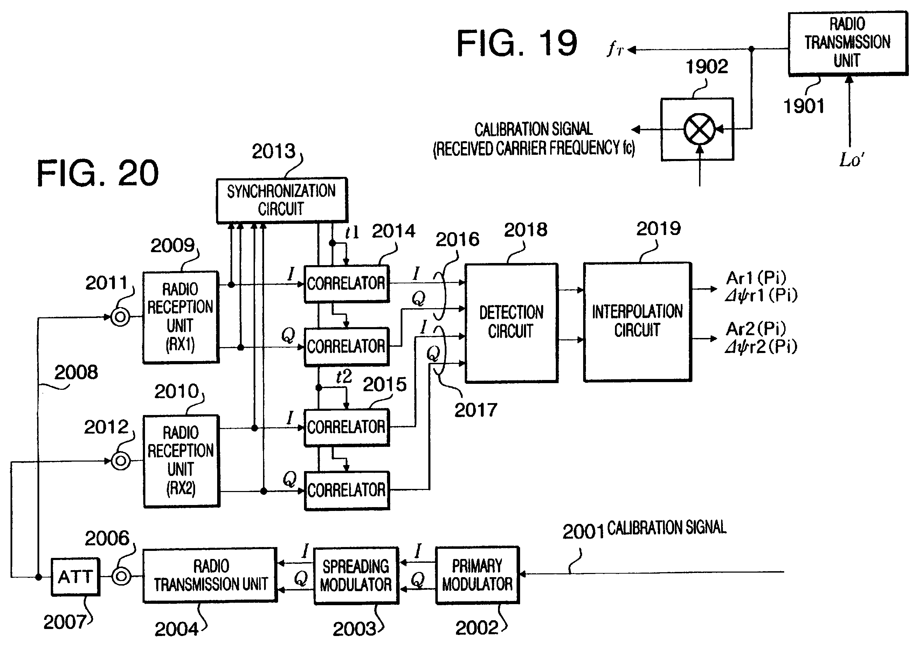

As shown in FIG.19, one possible configuration may be that the spread signal output by radio transmission unit 1901 of the direct sequence CDMA system based array antenna radio system is input to frequency conversion section 1902, converted to receive carrier frequency fc and then transmitted to the radio reception unit. This makes it possible to create a wideband calibration signal similar to the spread signal used for actual communications with a simple configuration by simply providing frequency conversion section 1902.

(Embodiment 8)

FIG.20 shows a configuration example of the calibration system related to Embodiment 8 of the present invention. This is the calibration system in FIG.12 plus an interpolation circuit. It shows a case where there are two antenna devices as the case with FIG.12. As shown in FIG.13 of Embodiment 2, when the calibration system has delay characteristic $\Delta\psi ri(Pm)$ and amplitude characteristic Ari(Pm) of the radio reception units according to receive electric field level Pm, it is necessary to measure delay characteristic $\Delta\psi ri(Pm)$ and amplitude characteristic Ari(Pm) when Pm is changed.

However, in FIG.12, when the attenuator set value is changed and receive electric field level Pm is changed, in order to obtain phase differences $\Delta\psi r1(Pm)$ and $\Delta\psi r2(Pm)$ and output or store them to accurately compensate variations of the delay characteristic and amplitude characteristic at the array antenna radio receive system according to the receive power level, it is necessary to change the quantity of attenuator variation minutely and in a wide range, which will require an enormous quantity of time and data for calibration.

Therefore, Embodiment 8 is equipped with a circuit that calculates delay differences and amplitude ratios corresponding to the receive power levels other than the measured receive power level by means of interpolation processing using the actually measured delay difference and amplitude ratio of each radio unit in addition to the calibration system configuration shown in FIG.12.

In FIG.20, calibration signal 2001 is primary-modulated by primary modulator 2002. The primary modulation signal is spread by the spreading code in spread modulator 2003 and input to radio transmission unit 2004. In radio transmission unit 2004, the transmit signal is quadrature-modulated and then up-converted to carrier frequency fc and output from transmit terminal 2006. fc is the receive carrier frequency of the present system. The signal output at carrier frequency fc is transmitted from transmit terminal 2006 to antenna connection terminals 2011 and 2012 of radio reception units 2009 and 2010 using cable 2008 with attenuator 2007 connected thereto. The receive output of each radio reception unit is input to synchronization circuit 2013 and despread timings t1 and t2 for each radio unit are generated. Then, correlators 2014 and 2015 carry out despreading using said timings t1 and t2 and output correlator outputs 2016 and 2017. Detection circuit 2018 obtains phase differences $\Delta\psi r1(Pm)$ and $\Delta\psi r2(Pm)$ and amplitude ratios Ar1(Pm) and Ar2(Pm) when receive power level Pm is changed by changing the attenuator set values and outputs or stores them.

Interpolation circuit 2019 also obtains phase difference $\Delta\psi ri(Pm)$ and amplitude ratio Ari(Pm) other than receive electric field level Pm measured above and outputs phase difference $\Delta\psi ri(Pm)$ and amplitude ratio Ari(Pm). For example, suppose that phase differences $\Delta\psi ri(P0)$ and $\Delta\psi ri(P2)$and amplitude ratios Ari(P0) and Ari(P2) at receive electric field levels P0 and P2 are the actually measured values in FIG.13. At this time, with interpolation circuit 1219, it is possible to obtain phase characteristic $\Delta\psi ri(P1)$ and amplitude characteristic Ari(P1) at unmeasured receive electric field level P1 through primary linear interpolation as follows:

$$\Delta\psi ri(P1) = (t \cdot \Delta\psi ri(P0) + s \cdot \Delta\psi ri(P2))/(s+t)$$

$$Ari(P1) = (t \cdot Ari(P0) + s \cdot Ari(P2))/(s+t)$$

where $P1 = (t \cdot P0 + s \cdot P2)/(s+t)$, $0<s$, $t<1$

According to Embodiment 8 as shown above, it is possible to obtain the phase difference and amplitude ratio at the receive electric field level to be compensated from the delay characteristic and amplitude characteristic data measured and stored in the vicinity of the receive electric field level to be compensated through interpolation processing. This makes it possible not only to accurately compensate delay differences and amplitude differences in the array antenna radio receive system according to the receive electric field level but also to reduce sample points of receive power level Pm to be measured.

The measured values used in interpolation processing need not necessarily be delay differences from the reference identification point and amplitude ratios but can also be calculated directly based on the despread correlator output.

For example, suppose that correlator output 2016 actually measured is expressed by correlative vector Ri(i=1, 2) and correlative vectors at receive electric field levels P0 and P2 are Ri(p0) and Ri(p2). Interpolation circuit 2019 can obtain correlative vector Ri(P1) at unmeasured receive electric field level P1 through primary linear interpolation as follows:

$$Ri(P1) = (t \cdot Ri(P0) + s \cdot Ri(P2))/(s+1)$$

where $P1 = (t \cdot P0 + s \cdot P2)/(s+1)$, $0<s$, $t<1$

Based on Ri(P1) above, phase characteristic $\Delta\psi ri(P1)$ and amplitude characteristic Ari(P1) at unmeasured receive electric field level P1 can be obtained. It is also possible to obtain the offset value when carrying out compensation to match the phase characteristic and amplitude characteristic of the radio reception units with those of radio reception unit RX1 (2009) from correlative vector Ri(P1) obtained through interpolation processing. That is, suppose that the offset value is vector Zri(Pm) (i=1, 2, m=0, 1, 2, ...), the offset value can be calculated from the following expressions:

$$Zr1(P1) = 1$$

$$Zr2(P1) = R1(P1)/R2(P1) = R1(P1) \times R2(P1)^*/|R2(P1)|^2$$

where * is complex conjugate

Industrial Applicability

As shown above, the calibration systems for the CDMA radio receive system related to the present invention are useful for accurately measuring delay characteristics and amplitude characteristics of a plurality of radio reception units and suitable for solving the problem that the directive pattern obtained from the weight convergence result including null points is different from the actual directive pattern.

**Claims**

1.  A calibration apparatus for an array antenna radio receive system having an array antenna with a plurality of antenna elements and a plurality of radio reception units provided for each of said antenna elements, comprising:

> supply means for supplying a calibration signal with substantially the same frequency band as a spread signal used for spread spectrum communications to each of said radio reception units;
> detection means for detecting at least one of delay characteristics and amplitude characteristics of said radio reception units from said calibration signal that has passed said radio reception units.

2.  The calibration apparatus according to claim 1, wherein:

> said supply means comprises:
>
>> primary-modulating means for primary-modulating the calibration signal;
>> spread-modulating means for spread-modulating the primary-modulated calibration signal;
>> converting means for converting the frequency band of the spread-modulated calibration signal to a receive carrier frequency;
>> transmitting means for transmitting the calibration signal converted to said receive carrier frequency to each of said radio reception units.

3.  The calibration apparatus according to claim 1, wherein:

> said detection means comprises:
>
>> detection means for detecting the synchronization timing of the calibration signal supplied to said radio reception units;
>> outputting means for outputting a correlation signal obtained by despreading said calibration signal based on the detected synchronization timing;
>> detection means for detecting a phase difference from said correlation signal relative to the reference identification point as an amount of delay of the radio reception unit corresponding to said correlation signal.

4.  The calibration apparatus according to claim 3, comprising:

> means for detecting a delay difference between said radio reception units by comparing the amounts of delay detected between said radio reception units;
> means for outputting or storing said delay difference.

5.  The calibration apparatus according to claim 1, wherein:

> said detection means comprises:
>
>> means for detecting the synchronization timing of the calibration signal supplied to said radio reception units;
>> means for outputting a correlation signal obtained by despreading said calibration signal based on the detected synchronization timing;
>> means for detecting the amplitude ratio to said correlation signal relative to the reference identification point as an amplitude ratio of the radio reception unit corresponding to said correlation signal.

6. The calibration apparatus according to claim 5, comprising:

means for detecting an amplitude difference between said radio reception units by comparing the amplitude ratios detected between said radio reception units;
means for outputting or storing said amplitude differences.

7. The calibration apparatus according to claim 1, wherein:

said supply means comprises means for changing the power level of the calibration signal supplied to said radio reception units;
said detection means detects the delay characteristic at each radio reception unit at each receive power level when said supply means changes the calibration signal to a plurality of power levels.

8. The calibration apparatus according to claim 1, wherein:

said supply means comprises means for changing the power level of the calibration signal supplied to said radio reception units;
said detection means detects the amplitude characteristic of each radio reception unit at each receive power level when said supply means changes the calibration signal to a plurality of power levels.

9. The calibration apparatus according to claim 1, comprising:

signal switching means which is provided between said antenna element and said radio reception units corresponding to said antenna element, for switching the signal input to said radio reception units between the received signal output from said antenna element and calibration signal supplied from said supply means.

10. The calibration apparatus according to claim 1, comprising:

multiplexing means which is provided between said antenna element and said radio reception units corresponding to said antenna element, for multiplexing the received signal output from said antenna element and the calibration signal supplied from said supply means.

11. The calibration apparatus according to claim 1, wherein:

said array antenna radio receive system comprises:

synchronization circuit that carries out synchronization detection of the received signal including the calibration signal output from said radio reception units;
despreading circuit that despreads the received signal including the calibration signal output from said radio reception units; and
said calibration apparatus farther comprises:

signal switching means for switching the signal input to said synchronization circuit and said despreading circuit for each radio reception unit on a time sharing basis.

12. The calibration apparatus according to claim 1, comprising:

means for generating a transmit timing signal that provides the transmit timing of the calibration signal supplied to said radio reception units;

means for acquiring the despread timing of the calibration signal output from said radio reception units from said transmit timing signal.

13. The calibration apparatus according to claim 1, comprising:

a signal generating source that generates a local signal;
and wherein:
a radio transmission unit and said radio reception units that up-convert the calibration signal to a receive carrier frequency carry out frequency conversion using the local signal generated from said signal generating source.

14. The calibration apparatus according to claim 1, wherein:

said supply means has power level changing means for changing the power level of the calibration signal supplied to said radio reception units;
said detection means obtains the delay characteristic value and amplitude characteristic value of each radio unit corresponding to power level other than the measured power level through interpolation processing based on the measured values if said supply means changes the calibration signal to a plurality of power levels.

15. The calibration apparatus according to claim 1, wherein:

said detection means comprises:

correlation signal outputting means for outputting the correlation signal by despreading the calibration signal output from said radio reception units;
operation executing means for executing operations to compensate delay differences and amplitude ratios of said radio reception units by directly using said correlation signal.

16. A delay detection apparatus that detects the amount of delay of each of radio reception units for an array antenna radio receive system comprising an array antenna containing a plurality of antenna elements and a plurality of said radio reception units provided for said antenna elements, comprising:

supply means for supplying a calibration signal with substamtially the same frequency band as the spread signal used for spread spectrum communications to each of said radio reception units;
detection means for detecting the amount of delay of said radio reception units from said calibration signal that has passed said radio reception units.

17. An amplitude detection apparatus that detects the amplitude characteristic of each of radio reception units for an array antenna radio receive system comprising an array antenna containing a plurality of antenna elements and a plurality of said radio reception units provided for said antenna elements, comprising:

supply means for supplying a calibration signal with substantially the same frequency band as the spread signal used for spread spectrum communications to each of said radio reception units;
detection means for detecting the amplitude characteristic of said radio reception units from said calibration signal that has passed said radio reception units.

18. A base station system equipped with an array antenna radio receive system comprising an array antenna containing a plurality of antenna elements and a plurality of radio reception units provided for said antenna elements, comprising:

one of the calibration apparatus described in claim 1 to claim 15.

19. A calibration method of an array antenna radio receive system comprising an array antenna containing a plurality of antenna elements and a plurality of radio reception units provided for said antenna elements, comprising the following steps of:

(a) generating a calibration signal with substantially the same frequency band as the spread signal used for spread spectrum communications;

(b) supplying said calibration signal to each of said radio reception units;

(c) detecting at least one of delay characteristics or amplitude characteristics of said radio reception units from said calibration signal that has passed said radio reception units.

EP 0 938 204 A1

# FIG. 1

401 ANTENNA

402 ANTENNA

404 ARRAY OUTPUT

$\Sigma$

403 WEIGHT

406 PRELIMINARY KNOWLEDGE

407

WEIGHT CONTROL

# FIG. 2

502

501 ANTENNA

RADIO UNIT 1
D1

RADIO UNIT 2
D2

RADIO UNIT N
Dn

ARRAY OUTPUT
505

507 RECEPTION DATA

$\Sigma$

504 WEIGHT

506 SPREADING CODE

503 OUTPUT SIGNAL

WEIGHT CONTROL

PRELIMINARY KNOWLEDGE

## FIG. 3

601 ANTENNA

RADIO UNIT 1 — D1
RADIO UNIT 2 — D2
RADIO UNIT N — Dn

DESPREADING

602 OUTPUT SIGNAL
603 SPREADING CODE
604 CORRELATION OUTPUT

WEIGHT

Σ → RECEPTION DATA

WEIGHT CONTROL ← PRELIMINARY KNOWLEDGE

## FIG. 4

703

MS2 705

701 BS

704

MS1

702

EP 0 938 204 A1

# FIG. 5

# FIG. 6

# FIG. 7

# FIG. 9

SYNCHRONIZATION CIRCUIT — 112

110

108

RADIO RECEPTION UNIT (RX1)

$t1$   113   115   117   118

$I$  CORRELATOR  $I$

$Q$   DETECTION CIRCUIT   $Ar1, \Delta\psi r1$

$Q$  CORRELATOR  $I$

$Q$   $Ar2, \Delta\psi r2$

109

113   $t2$   114   116   119

111

RADIO RECEPTION UNIT (RX2)

$I$  CORRELATOR

114

$Q$  CORRELATOR

106

107

RADIO TRANSMISSION UNIT

$I$   $I$

SPREADING MODULATOR

$Q$   $Q$

PRIMARY MODULATOR

101  CALIBRATION SIGNAL

104   103   102

# FIG. 8

POWER

1102 CALIBRATION SIGNAL

1101 TRANSMISSION SIGNAL

f0 — 1103   f

BANDWIDTH M

# FIG. 10

POWER

CALIBRATION SIGNAL

TRANSMISSION SIGNAL

f0   f

BANDWIDTH M

# FIG. 11A

PRIMARY MODULATION
SIGNAL(*QPSK*)

# FIG. 11B

SPREADED SIGNAL
(*BPSK*)

# FIG. 11C

PHASE
DIFFERENCE
$\Delta \psi r1$

RECEIVE
PHASE r1

REFERENCE
POINT

AMPLITUDE
RATIO
$Ar1,=b/a$

# FIG. 11D

PHASE
DIFFERENCE
$\Delta \psi r2$

RECEIVE
POINT $r2$

AMPLITUDE
RATIO
$Ar2,=c/a$

# FIG. 12

EP 0 938 204 A1

# FIG. 13A

# FIG. 13B

FIG. 14

SWITCHING SIGNAL 1411

SW

1409

1410

1408

1406

ATT 1407

SYNCHRONIZATION CIRCUIT 1414

RADIO RECEPTION UNIT (RX1) 1412

RADIO RECEPTION UNIT (RX2) 1413

RADIO TRANSMISSION UNIT 1404

CORRELATOR 1415

CORRELATOR 1415

CORRELATOR 1416

CORRELATOR 1416

DETECTION CIRCUIT 1419

$Ar1, \Delta\psi r1$

$Ar2, \Delta\psi r2$

1417

1418

$t1$

$t2$

PRIMARY MODULATOR 1402

SPREADING MODULATOR 1403

1401 CALIBRATION SIGNAL

## FIG. 15

1514 SYNCHRONIZATION CIRCUIT

1519 DETECTION CIRCUIT → Ar1, Δψr1 → Ar2, Δψr2

1515 CORRELATOR
1516 CORRELATOR
1515 1516 CORRELATOR
1516 CORRELATOR

1512 RADIO RECEPTION UNIT (RX1)
1513 RADIO RECEPTION UNIT (RX2)
1504 RADIO TRANSMISSION UNIT

1502 PRIMARY MODULATOR
1503 SPREADING MODULATOR

1501 CALIBRATION SIGNAL

1507 ATT
1506
1508
1509
1510

# FIG. 16

EP 0 938 204 A1

FIG. 17

FIG. 18

FIG. 19

RADIO TRANSMISSION UNIT

1901

1902

$f_T$

$Lo'$

CALIBRATION SIGNAL
(RECEIVED CARRIER FREQUENCY fc)

FIG. 20

2013
SYNCHRONIZATION CIRCUIT

2009
RADIO RECEPTION UNIT (RX1)

2011

2008

2010
RADIO RECEPTION UNIT (RX2)

2012

$t1$ 2014 2016 2018 2019

CORRELATOR

CORRELATOR

$t2$ 2015

CORRELATOR

CORRELATOR

2017

DETECTION CIRCUIT

INTERPOLATION CIRCUIT

Ar1 (Pi)
$\Delta\psi$r1 (Pi)

Ar2 (Pi)
$\Delta\psi$r2 (Pi)

$I$ $Q$

2006

ATT

2007

RADIO TRANSMISSION UNIT

2004

SPREADING MODULATOR

2003

PRIMARY MODULATOR

2002

2001 CALIBRATION SIGNAL

$I$

$Q$

EP 0 938 204 A1

## INTERNATIONAL SEARCH REPORT

| | International application No. |
|---|---|
| | PCT/JP98/01129 |

**A. CLASSIFICATION OF SUBJECT MATTER**

Int.Cl⁶ H04J13/00

According to International Patent Classification (IPC) or to both national classification and IPC

**B. FIELDS SEARCHED**

Minimum documentation searched (classification system followed by classification symbols)

Int.Cl⁶ H04J13/00

Documentation searched other than minimum documentation to the extent that such documents are included in the fields searched

Jitsuyo Shinan Koho (Y1, Y2)　　1926-1998　　Toroku Jitsuyo Shinan Koho (U)　　1994-1998
Kokai Jitsuyo Shinan Koho (U)　　1971-1998　　Jitsuyo Shinan Toroku Koho (Y2)　　1996-1998

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 1-206745, A (Mitsubishi Electric Corp.), August 18, 1989 (18. 08. 89), Fig. 1 (Family: none) | 1-19 |
| A | JP, 3-48540, A (Kyocera Corp.), March 1, 1991 (01. 03. 91), Fig. 1 (Family: none) | 1-19 |
| A | JP, 3-165103, A (NEC Corp.), July 17, 1991 (17. 07. 91), Fig. 1 (Family: none) | 1-19 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| May 8, 1998 (08. 05. 98) | May 19, 1998 (19. 05. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)